# EUROPÄISCHE PATENTSCHRIFT

(11) **EP 2 609 477 B1**
(45) Veröffentlichungstag und Bekanntmachung des Hinweises auf die Patenterteilung: **14.10.2015**
(21) Anmeldenummer: 11741445.8
(22) Anmeldetag: 03.08.2011
(51) Int. Cl.: B60K 26/02, G05G 1/40, G05G 1/42, G05G 1/44, G05G 1/445, G05G 1/405

(54) **PEDALWERTGEBERANORDNUNG**
PEDAL VALUE SENSOR ARRANGEMENT
SYSTÈME DE DÉTECTION DE PÉDALE

(30) Priorität: 02.08.2011 DE 102011080297; 25.08.2010 DE 102010039771
(43) Veröffentlichungstag der Anmeldung: 03.07.2013
(73) Patentinhaber: Robert Bosch GmbH, 70442 Stuttgart (DE)
(72) Erfinder: CIZEK, Vaclav, 39111 Plana na Luznici (CZ); FALAR, Dusan, 38901 Vodnany (CZ)
(86) Internationale Anmeldenummer: PCT/EP2011/063343
(87) Internationale Veröffentlichungsnummer: WO 2012/025350

(56) Entgegenhaltungen:
- EP-A1- 0 033 761
- EP-A2- 1 233 320
- DE-A1-102004 002 113
- DE-U1-202004 008 486
- FR-A1- 2 847 356

## Beschreibung

Die vorliegende Erfindung betrifft eine Pedalwertgeberanordnung gemäß dem Oberbegriff des Anspruches 1.

### Stand der Technik

In Kraftfahrzeugen, insbesondere bei Kraftfahrzeugen mit einem automatischen Schaltgetriebe, ist es häufig erforderlich, dass bei einem kräftigen Durchtreten eines Pedals als Gas- bzw. Fahrpedal ein elektrisches Schaltsignal erzeugt wird. Insbesondere soll damit bei dem kräftigen Durchtreten des Fahrpedals mit dem gewünschten starken Beschleunigen des Kraftfahrzeuges dadurch auf die nächst niedrigere Getriebestufe automatisch mit dem automatischen Schaltgetriebe zurückgeschaltet werden. Hierfür ist ein entsprechendes Schaltsignal in einer Zwischenstellung des Pedals zwischen einer Ruhestellung und einer Endstellung erforderlich. Um ein ungewolltes Zurückschalten des automatischen Schaltgetriebes zu vermeiden, muss an der Stellung, das heißt der Zwischenstellung des Pedals, bei welchem der elektrische Schaltpunkt ausgelöst wird, auch ein für den Fahrer spürbarer mechanischen Widerstand, das heißt ein deutlich spürbarer Anstieg der Kraft an dem Fahrpedal, vorhanden sein. Ein derartiger Schaltpunkt oder Schaltbereich in der Zwischenstellung des Pedals wird dabei auch als Kick-down-Schaltung bezeichnet.

Die DE 10 2005 038 750 A1 zeigt eine Kick-down-Einrichtung eines Fahrpedalmoduls eines Kraftfahrzeuges, welches ein an einem Lagerbock gelagertes, zwischen einer Ruhestellung und einer Endstellung verstellbares Fahrpedal beinhaltet, wobei die Kick-down-Einrichtung wenigstens ein in einer Ausnehmung des Fahrpedals oder des Lagerbocks axial geführtes Betätigungsglied mit wenigstens einer Wirkkante aufweist. Ferner ist die Kick-down-Einrichtung mit einem Keilglied versehen, welches in der Ausnehmung axial geführt ist, und mit dem Betätigungsglied über wenigstens einen Walzkörper zusammenwirkt und durch wenigstens eine Druckfeder belastet ist, wobei bei Betätigung des Fahrpedals bis zu einem definierten Punkt das Betätigungsglied in die Ausnehmung axial hinein und durch dessen Wirkkante der wenigstens eine Wälzkörper aus einer Querausnehmung der Ausnehmung radial heraus und gegen die Keilfläche des Keilglieds drängbar ist.

Die DE 100 10 432 A1 zeigt ein Kick-down-Element für ein Fahrpedalmodul eines Fahrzeuges, mit einem Gehäuse und mit einem im Gehäuse axial geführten, gegen die Kraft einer Rückstellfeder axial verschieblichen Betätigungsglied, das zwei diametral angeordnete Walzkörper trägt, die beim Einschieben des Betätigungsglieds in das Gehäuse zwecks Erhöhung der Verschiebekraft gegen die Kraft einer U-förmig gebogenen Blattfeder über jeweils eine Überdrückungskante hinweggedrückt werden, wobei die Wälzkörper ineinander diametral gegenüberliegenden Lagerschalen aufgenommen sind, dass die zwei langgestreckten Federschenkel und einen diese verbindenden Quersteg aufweisende Blattfeder mit ihrem Quersteg am Boden des Gehäuses festgelegt ist und mit ihren Federschenkeln unter Vorspannung so an den Lagerschalen anliegt, dass beim Einschieben des Betätigungsglieds die Wälzkörper sich auf die voneinander abgekehrten Außenseiten der Federschenkel aufschieben, und dass die Überdrückungskanten an den stirnseitigen Schenkelenden der Federschenkel ausgebildet sind.

Aus der DE 199 18 119 A1 ist eine Pedalwertgeberanordnung mit einem an einem Chassis eines Kraftfahrzeuges gelagerten, zwischen einer Ruhestellung und einer Endstellung verstellbaren Pedal bekannt. In einer Zwischenstellung zwischen der Ruhestellung und der Endstellung des Pedals drückt eine spannende Rückstell-Federanordnung das Pedal in Richtung der Ruhestellung. Ferner weist die Pedalwertgeberanordnung eine Kraftänderungseinrichtung auf.

Aus der DE 10 2004 060 482 A1 ist ein Kick-down-Element für einen Fahrpedalgeber bekannt. Dieser umfasst einen Träger und ein gegenüber dem Träger verschiebbar angeordnetes Gehäuse, wobei zwischen dem Träger und dem Gehäuse eine Anordnung zur Erzeugung eines Kraftsprunges aus einem ersten Arm und einem zweiten Arm mit einer zugeordneten ersten Andruckfläche und einer zugeordneten zweiten Andruckfläche vorgesehen ist, wobei die Andruckflächen unterschiedliche Konturen aufweisen.

Dokument FR 2 847 356 A1 wird als nächtsliegender Stand der Technik erkannt und beschreibt die Merkmale des Oberbegriffs des Anspruchs 1.

### Offenbarung der Erfindung

### Vorteile der Erfindung

Erfindungsgemäße Pedalwertgeberanordnung, umfassend ein zwischen einer Ruhestellung und einer Endstellung bewegliches Pedal als Fahr- oder Gaspedal, vorzugsweise ein Lager für das Pedal, eine Feder, welche auf das Pedal eine Rückstellkraft in Richtung der Ruhestellung aufbringt, und in einer Zwischenstellung zwischen der Ruhestellung und der Endstellung von der Feder auf das Pedal eine größere Rückstellkraft in Richtung der Ruhestellung aufbringbar ist als vor und/oder nach der Zwischenstellung, wobei aufgrund eines Kontaktes eines ersten Abschnittes der Feder mit einem zweiten Abschnitt der Feder die größere Rückstellkraft der Feder auftritt. In der Zwischenstellung tritt eine größere Rückstellkraft oder ein Kraftsprung der von der Feder auf das Pedal als Gaspedal aufgebrachten Rückstellkraft auf. Die größere Rückstellkraft wird dabei aufgrund eines Kontaktes zwischen dem ersten und zweiten Abschnitt der Feder zur Verfügung gestellt bzw. tritt deshalb auf, sodass die Pedalwertgeberanordnung konstruktiv einfach mit wenigen Bauteilen ausgebildet ist, weil der Kraftsprung bzw. die größere Rückstellkraft von der Feder alleine zur Verfügung gestellt werden kann, ohne dass hierfür zusätzliche Bauteile zur Erzeugung des Kraftsprunges oder der größeren Rückstellkraft erforderlich sind. Die Zwischenstellung ist dabei ein Punkt der Stellung des Pedals oder ein Bereich der Stellung des Pedals. Ist das Pedal beispielsweise um eine Schwenkachse verschwenkbar gelagert, stellt die Zwischenstellung entweder einen bestimmten Drehwinkel des Pedals dar oder die Zwischenstellung ist ein Drehwinkelbereich, zum Beispiel in einem Bereich von 5° oder 10°, des Pedals. Die Feder stellt eine Kick-Down-Feder dar, welche nur in einem Teilbereich der Stellung des Pedales zwischen der Ruhestellung und der Endstellung auf das Pedal die Rückstellkraft aufbringt und dieser Teilbereich ist vorzugsweise von der Endstellung begrenzt oder liegt in der Nähe der Endstellung, so dass vorzugsweise in einem Bereich der Stellung des Pedales an der Ruhestellung von der Feder keine Rückstellkraft auf das Pedal aufgebracht wird oder aufbringbar ist.

In einer weiteren Ausführungsform umfasst die Pedalwertgeberanordnung wenigstens eine Rückstellfeder, vorzugsweise zwei Rückstellfedern, welche auf das Pedal eine Rückstellkraft in Richtung der Ruhestellung aufbringt, um das Pedal in die Ruhestellung zu bewegen. Die wenigstens eine Rückstellfeder bringt in sämtlichen Stellungen des Pedales zwischen der Ruhestellung und der Endstellung auf das Pedal eine Rückstellkraft auf. Im Gegensatz hierzu bringt die Feder als Kick-Down-Feder nur in einem Teilbereich der Stellungen des Pedales, insbesondere einem Teilbereich der von der Endstellung begrenzt ist oder in der Nähe der Endstellung liegt, auf das Pedal eine Rückstellkraft auf. Hauptaufgabe der Feder ist es somit nicht, das Pedal in die Ruhestellung zu bewegen, sondern bei Stellungen des Pedales im Bereich der Endstellungen an einer Zwischenstellung eine größere Rückstellkraft bzw. einen Kraftsprung zu erzeugen.

In einer zusätzlichen Ausgestaltung ist die größere Rückstellkraft ausschließlich von der Feder aufbringbar oder zur Verfügung stellbar.

In einer Variante weist die Pedalwertgeberanordnung außer der Feder keine zusätzlichen Bauteile, einen Mechanismus oder eine Kinematik zur Erzeugung der größeren Rückstellkraft auf, wobei vorzugsweise die wenigstens eine Rückstellfeder hierbei nicht berücksichtigt ist.

In einer weiteren Ausgestaltung bedingt die Geometrie der Feder in der Zwischenstellung eine zusätzliche Verformung der Feder und die zusätzliche Verformung der Feder bedingt die größere Rückstellkraft, wobei die zusätzliche Vorformung eine Verformung ist, welche sich von der Verformung der Feder bei einer Bewegung der Feder außerhalb der Zwischenstellung unterscheidet. Die zusätzliche Verformung stellt dabei eine ergänzende Verformung der Feder dar, welche in Ergänzung aufgrund der Bewegung des Pedals bzw. der Bewegung der Feder auftritt. Die zusätzliche Verformung tritt dabei ausschließlich nur in der Zwischenstellung des Pedals auf, sodass dadurch die zusätzliche Verformung und damit auch die größere Rückstellkraft nur in der Zwischenstellung des Pedals vorhanden ist. Die zusätzliche Verformung ist beispielsweise eine Verformung der Feder im Bereich einer Ausstülpung und/oder eine Verformung der Feder zwischen der Ausstülpung und einem zweiten Ende.

In der erfindungsgemäße Pedalwertgeberanordnung wird die Feder im Wesentlichen als ein unterbrochener Ring mit zwei Enden ausgebildet und der erste und zweite Abschnitt der Feder im Bereich der zwei Enden ausgebildet ist.

Zweckmäßig verursacht der Kontakt zwischen dem ersten Abschnitt der Feder mit dem zweiten Abschnitt der Feder Reibungskräfte und die Reibungskräfte verursachen die größere Rückstellkraft. Dabei haben die Reibungskräfte vorzugsweise nur einen Anteil an der größeren Rückstellkraft.

In einer Variante ist die Feder mit dem Pedal kinematisch gekoppelt, so dass bei einer Bewegung des Pedals der erste Abschnitt der Feder eine Relativbewegung bezüglich dem zweiten Abschnitt der Feder ausführt.

In einer zusätzlichen Ausführungsform bedingt die Geometrie der Feder bei dem Kontakt und der Relativbewegung zwischen dem ersten Abschnitt der Feder und dem zweiten Abschnitt der Feder die zusätzliche Verformung der Feder und die Feder stellt damit eine Federkinematik dar.

Vorzugsweise ist die zusätzliche Verformung eine Biegung der Feder.

In einer zusätzlichen Ausgestaltung besteht in einer Stellung des Pedals zwischen der Ruhestellung und der Zwischenstellung kein Kontakt zwischen dem ersten und zweiten Abschnitt der Feder und/oder in der Zwischenstellung des Pedals besteht ein Kontakt zwischen dem ersten und zweiten Abschnitt der Feder und/oder in einer Stellung des Pedals zwischen der Zwischenstellung und der Endstellung ein oder kein Kontakt zwischen dem ersten und zweiten Abschnitt der Feder besteht.

Insbesondere ist das Pedal mittels einer Kinematik oder einem Mechanismus mit der Feder mechanisch gekoppelt und/oder das Pedal ist um eine Schwenkachse verschwenkbar gelagert. Vorzugsweise wird dabei von der Kinematik oder dem Mechanismus eine Rotationsbewegung des Pedals in eine Translationsbewegung einer Komponente, insbesondere einen Zylinder, der Kinematik oder des Mechanismus umgewandelt. Die Komponente, insbesondere der Zylinder liegt dabei vorzugsweise auf der Feder auf und durch diese Komponente wird die Rückstellkraft auf das Pedal übertragen. Darüber hinaus weist die Kinematik oder der Mechanismus vorzugsweise ein

Übersetzungsverhältnis auf, sodass eine Relativbewegung des Pedals größer oder kleiner ist und dabei in einem gewissen Verhältnis steht zu einer Relativbewegung der Feder oder der Komponente, insbesondere dem Zylinder, der Kinematik oder des Mechanismus.

In einer Variante ist die Feder eine Blattfeder und/oder die Pedalwertgeberanordnung umfasst nur eine Feder, wobei die Rückstellfeder nicht berücksichtigt ist, so dass eine Pedalwertgeberanordnung mit einer Feder und zwei Rückstellfedern nur eine Feder als Kick-Down-Feder umfasst. Der erste Abschnitt und der zweite Abschnitt sind dabei vorzugsweise in einem Abstand von weniger als 40%, 30%, 20% oder 10 % der Länge des Ringes zu einem Ende vorhanden. Der erste Abschnitt weist somit diesen Abstand zu einem ersten Ende auf und der zweite Abschnitt weist somit diesen Abstand zu einem zweiten Ende des Ringes auf. Der Ring kann dabei unterschiedliche geometrische Formen aufweisen, beispielsweise neben einer ungefähren kreisförmigen Ausbildung kann der Ring auch andere Geometrien, beispielsweise quadratisch, dreiecksförmig und vorzugsweise mit Ausstülpungen oder Auswölbungen aufweisen. Ein im Wesentlichen quadratischer Ring stellt somit im Wesentlichen ein Quadrat dar und das Quadrat ist an einer Stelle unterbrochen und an dieser Unterbrechung des quadratischen Ringes sind die beiden Enden vorhanden.

In einer weiteren Variante weist die Pedalwertgeberanordnung einen Sensor, insbesondere eine elektrische Kontaktierung, einen induktiven Sensor oder eine Lichtschranke, auf zur Erfassung der Zwischenstellung des Pedals. Mit dem Sensor kann die Zwischenstellung des Pedales erfasst werden und somit von der Steuerungseinheit des Kraftfahrzeuges ein Zurückschalten eines automatischen Schaltgetriebes in eine oder mehrere nächst niedrigere Getriebestufen erreicht werden.

Zweckmäßig besteht die Feder wenigstens teilweise, insbesondere vollständig, aus Metall, z. B. Stahl, Aluminium oder Messing.

In einer vorteilhaften anderen Ausführungsform besteht die Feder wenigstens teilweise, insbesondere vollständig, aus Kunststoff.

In einer besonders vorteilhaften Variante ist die Feder mit einer Wellung versehen, insbesondere ist die Wellung in einem Teilbereich zwischen dem ersten Abschnitt und dem zweiten Abschnitt ausgebildet ist. Aufgrund der Wellung benötigt die Feder weniger Bauraum und/oder die Feder erniedrigt die Federkonstante der Feder gemäß dem Hookeschen Gesetz, d. h. die Feder ist dadurch weicher.

In einer vorteilhaften Ausgestaltung ist die Feder zweiteilig ausgebildet mit einer ersten Feder aus Kunststoff und einer zweiten Feder als Zusatzfeder aus Metall, z. B. Stahl, Aluminium oder Messing.

In einer weiteren Ausgestaltung umfasst die Pedalwertgeberanordnung einen Pedalstellungssensor zur Erfassung der Stellung des Pedales und mit der von dem Pedalstellungssensor erfassten Stellung des Pedales wird von einer Steuerungseinheit die Leistung eines Verbrennungsmotors gesteuert.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark vereinfachte Darstellung einer Pedalwertgeberanordnung,
- Fig. 2: eine Feder in einem ersten Ausführungsbeispiel und einen Zylinder in den Stellungen A bis D der Pedalwertgeberanordnung gemäß Fig. 1,
- Fig. 3: ein Kraft-Weg-Diagramm der Feder gemäß Fig. 1 und 2,
- Fig. 4: eine perspektivische Ansicht der Feder gemäß Fig. 1 und 2,
- Fig. 5: eine Seitenansicht der Feder in einem zweiten Ausführungsbeispiel,
- Fig. 6: eine Seitenansicht der Feder in einem dritten Ausführungsbeispiel,

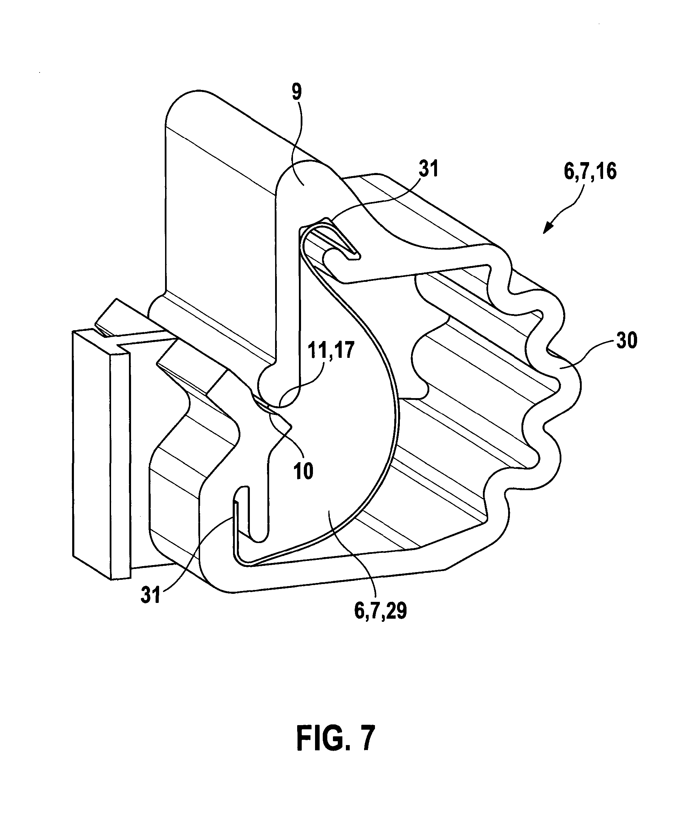

- Fig. 7: eine perspektivische Ansicht der Feder gemäß Fig. 6 und

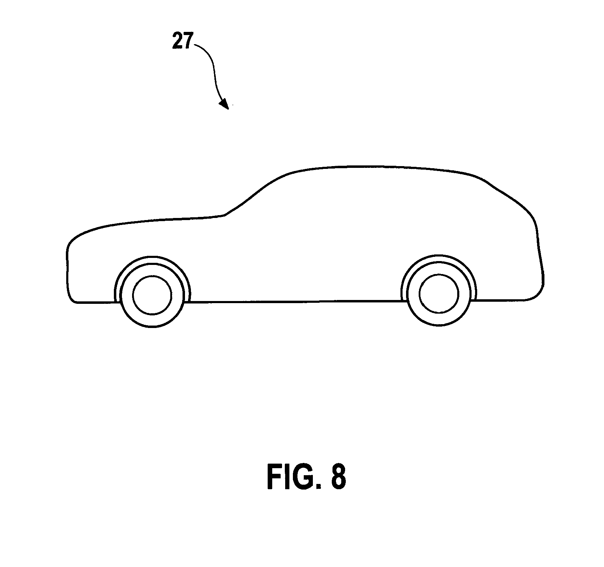

- Fig. 8: eine Seitenansicht eines Kraftfahrzeuges.

### Ausführungsformen der Erfindung

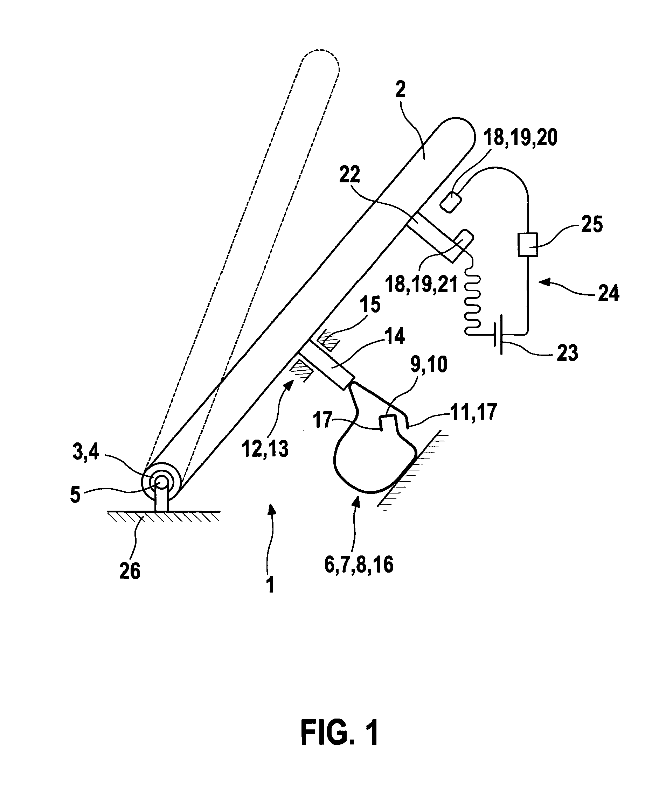

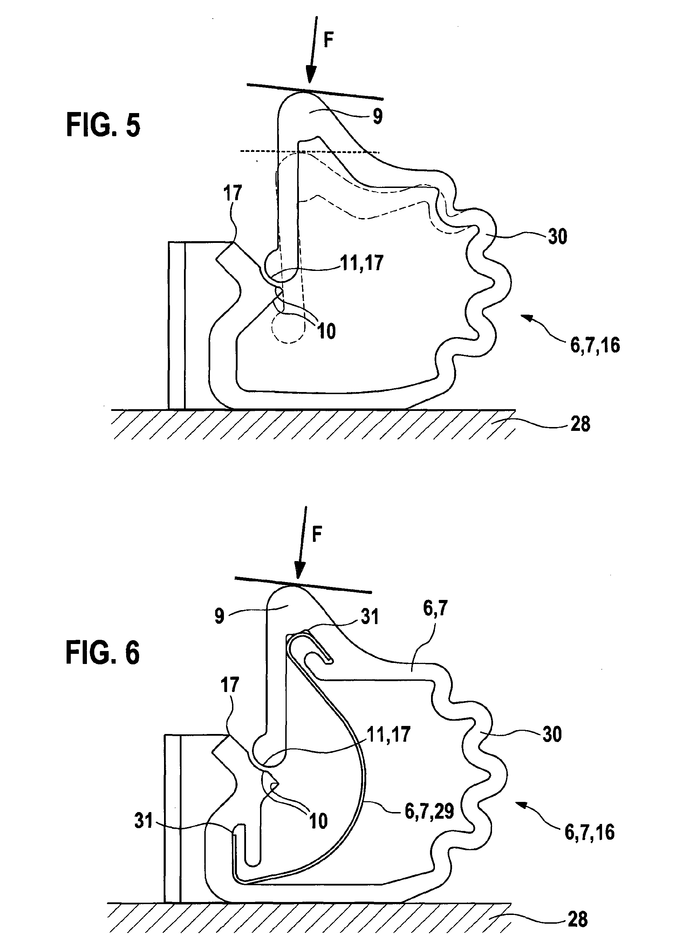

Eine in Fig. 1 dargestellte Pedalwertgeberanordnung 1 wird in einem Kraftfahrzeug 27 (Fig. 5) eingesetzt, beispielsweise im Zusammenhang mit einem automatischen Schaltgetriebe. Dabei tritt an einem Pedal 2 der Pedalwertgeberanordnung 1 zwischen einer Ruhestellung und einer Endstellung in einer Zwischenstellung eine größere Rückstellkraft bzw. ein Kraftsprung auf und die Zwischenstellung des Pedals 2 wird von der Pedalwertgeberanordnung 1 erfasst, sodass dadurch in der Zwischenstellung beispielsweise ein selbsttätiges Zurückschalten des automatischen Schaltgetriebes mittels einer nicht dargestellten Steuerungseinheit des Kraftfahrzeuges 27 bewirkt werden kann.

Das Pedal 2 als Gas- oder Fahrpedal ist von einem als Gleitlager 4 ausgebildeten Lager 3 um einen Schwenkachse 5 verschwenkbar gelagert. Dabei ist das Lager 3 des Pedals 2 an einem Chassis 26 des Kraftfahrzeuges 27 befestigt. Das Pedal 2 kann zwischen einer in Fig. 1 dargestellten Endstellung und einer in Fig. 1 strichliert dargestellten Ruhestellung um die Schwenkachse 5 verschwenkt werden. Zwischen der Endstellung und der Ruhestellung tritt ferner auch eine Zwischenstellung des Pedals 2 auf. In der in Fig. 1 dargestellten Endstellung wird mittels eines nicht dargestellten Fußes eines Fahrers des Kraftfahrzeuges 27 auf das Pedal 2 eine Kraft aufgebracht und durch diese Kraft eine Rückstellkraft einer Feder 6, welche auf das Pedal 2 wirkt, überwunden. Zusätzlich weist die Pedalwertgeberanordnung 1 zwei nicht dargestellte Rückstellfedern auf, welche das Pedal in die Ruhestellung bewegen und dessen Rückstellkraft ist ebenfalls von dem Fuß des Fahrers zu überwinden. In der Endstellung wird dabei von einem nicht dargestellten Verbrennungsmotor des Kraftfahrzeuges 27 die maximal zur Verfügung stehende Leistung und in der Ruhestellung die minimale Leistung abgefordert. Nimmt der Fahrer des Kraftfahrzeuges 27 den Fuß vom Pedal 2, bewegt sich das Pedal 2 in die Ruhestellung (strichliert dargestellt) wieder zurück aufgrund der von den nicht dargestellten Rückstellfedern auf das Pedal 2 aufgebrachten Rückstellkraft.

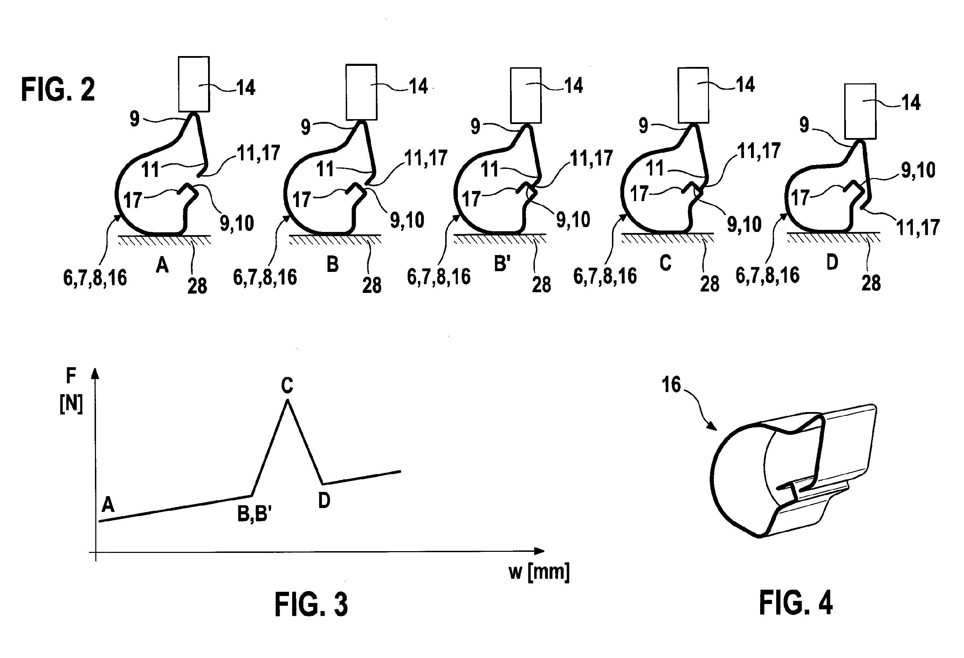

Die Feder 6, welche als Blattfeder 7 aus Metall, z. B. Stahl, Aluminium oder Messing, in einem ersten Ausführungsbeispiel ausgebildet ist (Fig. 1 und 2), weist in dem Schnitt gemäß Fig. 1 und 2 ungefähr die Form bzw. Geometrie eines unterbrochenen Ringes 16 auf. Der unterbrochene Ring 16 bzw. die Feder 6 weist dabei zwei Enden 17 auf. Im Bereich oder in der Nähe der Enden 17 weist die Feder 6 einen ersten Abschnitt 10 und einen zweiten Abschnitt 11 auf. Ferner ist an dem ersten Abschnitt 10 der Feder 6 diese in der Form einer Ausstülpung 9 ausgebildet. Das bewegliche Pedal 2 kann über eine Kinematik 12 oder einen Mechanismus 13 mechanisch auf die Feder 6 wirken. Wenn das Pedal 2, ausgehend von der gestrichelt dargestellten Ruhestellung, einen gewissen Weg bzw. Winkel zurückgelegt hat, dann tritt bei einer Bewegung des Pedals 2 auch eine Relativbewegung zwischen dem ersten Abschnitt 10 und dem zweiten Abschnitt 11 der Feder 6 auf. Die Kinematik 12 besteht dabei aus einem Kolben 14, der in einem Zylinder 15 angeordnet ist. Der Zylinder 15 liegt dabei an einem ersten Ende auf dem Pedal 2 auf und an einem anderen, diesem Ende gegenüberliegenden Ende des Zylinders 15 auf einer weiteren Ausstülpung 9 der Feder 6 auf (Fig. 1 und 2). Der Kolben 14 führt dabei aufgrund der Lagerung in dem Zylinder 15 ausschließlich eine Translationsbewegung aus. Dadurch wird die Rotationsbewegung des Pedals 2 und aufgrund der beweglichen Auflagerung des Zylinders 14 auf dem Pedal 2 die Rotationsbewegung des Pedals 2 in eine Translationsbewegung des Zylinders 15 umgewandelt. Die Feder 6 kann damit mittels des Mechanismus 13 oder der Kinematik 12 eine Rückstellkraft auf das Pedal 2 aufbringen.

In Fig. 3 ist in einem Diagramm an der Abszisse der Verstellweg w des Kolbens 14 und an der Ordinate die Kraft F als Rückstellkraft aufgetragen. Die Rückstellkraft stellt somit die von der Feder 6 auf den Kolben 14 aufgebrachte Rückstellkraft dar. Die von den beiden nicht dargestellten Rückfedern auf das Pedal 2 aufgebrachte Kraft ist in Fig. 3 nicht dargestellt. Der Verstellweg w des Kolbens 14 ist dabei in Millimeter (mm) angegeben und die Kraft F als Rückstellkraft in Newton (N). Zwischen den Stellungen A und B des Kolbens 14, und damit als Folge hiervon auch des Pedals 2, tritt an dem Kolben 14 lediglich die Rückstellkraft auf, welche linear in Abhängigkeit von dem Verstellweg w zwischen A und B direkt proportional zunimmt. Die Stellung A ist eine Stellung des Pedales 2 zwischen der gestrichelt dargestellten Ruhestellung und der Endstellung, wobei in der Stellung A das Pedal 2 beispielsweise bereits ca. 80 % des Verstellweges zwischen der Ruhestellung und der Endstellung zurückgelegt hat. In einer Stellung des Pedals 2 zwischen der Ruhestellung und der Stellung A besteht kein Kontakt zwischen dem Kolben 14 und der Feder 6 (nicht in Fig. 2 und 3 dargestellt). Zwischen B und D tritt eine größere Rückstellkraft bzw. ein Kraftsprung der von der Feder 6 auf das Pedal 2 aufgebrachten Kraft auf. B ist somit die Stellung des Pedals 2 bzw. des Kolbens 14 vor der Zwischenstellung, und D ist die Stellung des Pedals 2 bzw. des Kolbens 14 nach der Zwischenstellung des Pedals 2. In der Stellung C des Kolbens 14 bzw. des Pedals 2 tritt die maximale größere Rückstellkraft bzw. der maximale Kraftsprung auf. Bei einer weiteren Bewegung des Pedals 2 nach der Zwischenstellung in Richtung der Endstellung nach der Stellung D tritt wieder ausschließlich die direkt proportional zunehmende Rückstellkraft auf.

Bei einer Rückbewegung des Pedales 2 von der Endstellung in die Stellung A tritt ebenfalls ein Kraftsprung auf, wobei dieser Kraftsprung jedoch, abhängig von der konstruktiven Ausgestaltung der Abschnitte 10 und 11 der Feder 6, meistens kleiner ist und in entgegengesetzte Richtung erfolgt. Bei der Rückbewegung des Pedals 2 bleibt der zweite Abschnitt 11 an dem ersten Abschnitt 10 etwas hängen. Das Hängenbleiben ist jedoch nur so schwach, dass ein Zurückgehen der Feder 6 in die Stellung A gewährleistet bleibt. Unabhängig von der Feder 6 kann die mindestens eine, nicht dargestellte Rückstellfeder das Pedal 6 in die gestrichelt dargestellte Ruhestellung verstellen. Aus Sicherheitsgründen hat die Pedalwertgeberanordnung 1 üblicherweise zwei Rückstellfedern (nicht dargestellt).

Das geringfügige Hängenbleiben des Pedals 2 spürt der das Pedal 2 betätigende Fahrer. Dieses geringfügige Hängenbleiben kann dazu verwendet werden, um dem Fahrer ein haptisches Signal zu geben. Mit diesem Signal kann dem Fahrer beispielsweise ein bevorstehendes Umschalten des nicht dargestellten Getriebes angekündigt werden. Der Fahrer kann dann entscheiden, ob er den Fuß noch etwas zurücknimmt, und so das Umschalten zulässt, oder nicht.

In Fig. 2 sind korrespondierend zu den in Fig. 3 aufgetragenen Stellungen A bis D korrespondierenden Formen bzw. Geometrien der Feder 6 in dem ersten Ausführungsbeispiel für diese Stellungen des Pedals 2 bzw. des Kolbens 14 abgebildet. In den Stellungen A und B tritt kein Kontakt zwischen dem ersten Abschnitt 10 der Feder 6 als Ausstülpung 9 und dem zweiten Abschnitt 11 der Feder 6 auf. Die von der Feder 6 zur Verfügung gestellte Rückstellkraft zwischen den Stellungen A und B resultiert somit im Wesentlichen aus einer Verformung der Feder 6 in einem ungefähr kreisförmigen Abschnitt gemäß der Darstellung in Fig. 2 links von dem ersten Abschnitt 10 und unterhalb einer Ausstülpung 9, auf welcher der Kolben 14 aufliegt. Die Feder 6 ist an einem in Fig. 2 nur stark vereinfachten Gehäuse 28 befestigt und in diesem Gehäuse 28 angeordnet, wobei ferner innerhalb des Gehäuses 28 auch die Kinematik 12 positioniert ist. Die Stellung B des Pedals 2 bzw. des Kolbens 14 ist eine Stellung kurz vor einem Kontakt des zweiten Abschnittes 11 auf dem ersten Abschnitt 10. In der Stellung B' tritt ein Kontakt zwischen dem zweiten Abschnitt 11 der Feder 6 und dem ersten Abschnitt 10 der Feder 6 auf, so dass bei einer weiteren Bewegung nach der Stellung B' in Richtung der Stellung C aufgrund der Geometrie der Ausstülpung 9 an dem ersten Abschnitt 10 der zweite Abschnitt 11 gemäß der Darstellung in Fig. 2 nach rechts und vorzugsweise der erste Abschnitt 10 geringfügig nach links verformt wird, um eine weitere Bewegung des Pedals 2 nach unten zu ermöglichen. Dadurch tritt an der Feder 6 aufgrund des Kontaktes zwischen dem ersten und zweiten Abschnitt 10, 11 der Feder 6 eine zusätzliche Verformung der Feder 6 auf, welche die größere Rückstellkraft bzw. den Kraftsprung bedingt. Bei einer weiteren Bewegung des Pedals 2 bzw. des Kolbens 14 nach der Stellung C in Richtung der Endstellung, tritt eine Abnahme der größeren Rückstellkraft auf, weil aufgrund der Geometrie des zweiten Abschnitts 11 der Feder 6 sich der zweite Abschnitt 11 wieder zurück verformen kann. Damit wird nach dem weiteren Bewegen des Pedals 2 bzw. des Kolbens 14 in Richtung der Endstellung nach der Stellung D die größere Rückstellkraft bzw. der Kraftsprung überwunden.

Die Pedalwertgeberanordnung 1 ist ferner mit einer Einrichtung zur Erfassung der Zwischenstellung des Pedals 2 versehen. Hierzu ist an dem Pedal 2 an einem Haltestab 22 ein erstes elektrisches Kontaktelement 21 befestigt als elektrische Kontaktierung 19 und Sensor 18. Ein zweites elektrisches Kontaktelement 20, ebenfalls als elektrische Kontaktierung 19 und Sensor 18, ist dabei mittels Leitungen mit einer Stromquelle 23 verbunden, so dass ein Stromkreis 24 vorhanden sein kann. In den Stromkreis 24 ist eine Strommesseinrichtung 25 angeordnet. Lediglich in der Zwischenstellung des Pedals 2 kommt es zu einem mechanischen und damit auch elektrischen Kontakt zwischen dem ersten Kontaktelement 20 und dem zweiten Kontaktelement 21. Damit wird der Stromkreis 24 geschlossen und es fließt durch diesen Strom. Dieser Strom kann von der Strommesseinrichtung 25 erfasst werden und damit zu einer Steuerungseinheit des Kraftfahrzeuges 24 ein Signal gesendet werden. Mit diesem Schaltsignal bzw. Signal dieser Einrichtung kann selbsttätig ein automatisches Schaltgetriebe des Kraftfahrzeuges 27 auf die nächste niedrigere Fahrstufe zurückgeschaltet werden.

In Fig. 5 ist ein zweites Ausführungsbeispiel der Feder 6 dargestellt. Die Feder 6 besteht nicht aus Metall wie in dem ersten Ausführungsbeispiel gemäß Fig. 2 und 4, sondern aus, vorzugsweise thermoplastischen, Kunststoff. Der Ring 16 weist an einem Teilabschnitt zwischen dem ersten Abschnitt 10 und dem zweiten Abschnitt 11 eine Wellung 30 auf. Die Wellung 30 erniedrigt die Federkonstante der Feder 6 gemäß dem Hookeschen Gesetz.

Durch die Wellung 30 der Feder 6 wird erreicht, dass in der Feder 6 eine wesentlich geringere Materialspannung auftritt, verglichen mit einer Feder ohne eine solche Wellung. Soll aus Gründen der Dauerhaltbarkeit eine bestimmte Materialspannung nuicht überschritten werden, dann kann eine Feder 6 mit der Wellung 30 wesentlich kleiner gebaut werden als eine Feder ohne Wellung. Mit anderen Worten: Die Feder 6 mit der Wellung 30 benötigt insgesamt einen kleineren Einbaurau als eine Feder ohne eine Wellung.

In Fig. 6 ist ein drittes Ausführungsbeispiel der Feder 6 dargestellt. Die Feder 6 in dem dritten Ausführungsbeispiel ist zweiteilig und umfasst die in dem zweiten Ausführungsbeispiel dargestellte Feder 6 als erste Feder 6 aus Kunststoff und in Ergänzung hierzu eine Zusatzfeder 31 als zweite Feder 6 aus Metall, z. B. Stahl, Aluminium oder Messing. Die Zusatzfeder 29 ist an ihren beiden Enden jeweils in Aussparungen 31 an der ersten Feder 6 gehalten. Die Zusatzfeder 29 erhöht die Rückstellkraft der zweiteiligen Feder 6 in der Stellung C, so dass eine größere maximale Rückstellkraft auftritt. Ferner kann bei Bedarf die Zusatzfeder 29 dazu verwendet werden, um eine Rückbewegung von der Endstellung in die Ruhestellung zu unterstützen. Die erste Feder 6 aus thermoplastischem Kunststoff wird in einem Spritzgusswerkzeug durch Spritzgießen hergestellt. Um unterschiedliche maximale Rückstellkräfte bzw. unterschiedliche Federkonstanten der zweiteiligen Feder 6 zu erhalten, können an einer identischen ersten Feder 6 aus Kunststoff unterschiedliche Zusatzfedern 29 angeordnet werden, so dass lediglich mit unterschiedlichen Zusatzfedern 29 unterschiedliche zweiteilige Federn 6 zur Verfügung gestellt bzw. hergestellt werden können.

Insgesamt betrachtet sind mit der erfindungsgemäßen Pedalwertgeberanordnung 1 wesentliche Vorteile verbunden. Die Pedalwertgeberanordnung 1 weist nur eine Feder 6 auf, welche sowohl die direkt proportional zunehmende Rückstellkraft als auch die größere Rückstellkraft bzw. den Kraftsprung zur Verfügung stellt, sodass in vorteilhafter Weise keine zusätzlichen Bauteile oder Einheiten erforderlich sind, welche einen Kraftsprung an dem Pedal 2 im Bereich der Zwischenstellung zur Verfügung stellen.

## Patentansprüche

1. Pedalwertgeberanordnung (1) für ein Kraftfahrzeug (27), umfassend
- ein zwischen einer Ruhestellung und einer Endstellung bewegliches Pedal (2),
- eine Feder (6), welche auf das Pedal (2) eine Rückstellkraft in Richtung der Ruhestellung aufbringt, und
- wobei in einer Zwischenstellung zwischen der Ruhestellung und der Endstellung von der Feder (6) auf das Pedal (2) eine größere Rückstellkraft in Richtung der Ruhestellung aufbringbar ist als vor und/oder nach der Zwischenstellung,
- wobei die Feder (6) einen ersten Abschnitt (10) und einen zweiten Abschnitt (11) aufweist,
**dadurch gekennzeichnet, dass**
aufgrund eines Kontaktes des ersten Abschnittes (10) der Feder (6) mit dem zweiten Abschnitt (11) der Feder (6) die größere Rückstellkraft der Feder (6) auftritt, wobei die Feder (6) im wesentlichen als ein unterbrochener Ring (16) mit zwei Enden (17) und der erste und zweite Abschnitt (10, 11) der Feder (6) im Bereich der zwei Enden (17) ausgebildet ist.

2. Pedalwertgeberanordnung nach Anspruch 1, **dadurch gekennzeichnet, dass**
die Geometrie der Feder (6) in der Zwischenstellung eine zusätzliche Verformung der Feder (6) bedingt und die zusätzliche Verformung der Feder (6) die größere Rückstellkraft bedingt, wobei die zusätzliche Vorformung eine Verformung ist, welche sich von der Verformung der Feder (6) bei einer Bewegung der Feder (6) außerhalb der Zwischenstellung unterscheidet.

3. Pedalwertgeberanordnung nach Anspruch 1 oder 2, **dadurch gekennzeichnet, dass**
der Kontakt zwischen dem ersten Abschnitt (10) der Feder (6) mit dem zweiten Abschnitt (11) der Feder (6) Reibungskräfte verursacht und die Reibungskräfte die größere Rückstellkraft verursachen.

4. Pedalwertgeberanordnung nach einem oder mehreren der vorhergehenden Ansprüche, **dadurch gekennzeichnet, dass** die Feder (6) mit dem Pedal (2) kinematisch gekoppelt ist, so dass bei einer Bewegung des Pedals (2) der erste Abschnitt (10) der Feder (6) eine Relativbewegung bezüglich dem zweiten Abschnitt (11) der Feder (6) ausführt.

5. Pedalwertgeberanordnung nach einem oder mehreren der vorhergehenden Ansprüche, **dadurch gekennzeichnet, dass** die Geometrie der Feder (6) bei dem Kontakt und der Relativbewegung zwischen dem ersten Abschnitt (10) der Feder (6) und dem zweiten Abschnitt (11) der Feder (6) die zusätzliche Verformung der Feder (6) bedingt.

6. Pedalwertgeberanordnung nach einem oder mehreren der Ansprüche 2 bis 5, **dadurch gekennzeichnet, dass**
die zusätzliche Verformung eine Biegung der Feder (6) ist.

7. Pedalwertgeberanordnung nach einem oder mehreren der vorhergehenden Ansprüche, **dadurch gekennzeichnet, dass** in einer Stellung des Pedals (2) zwischen der Ruhestellung und der Zwischenstellung kein Kontakt zwischen dem ersten und zweiten Abschnitt (10, 11) der Feder (6) besteht
und/oder
in der Zwischenstellung des Pedals (2) ein Kontakt zwischen dem ersten und zweiten Abschnitt (10, 11) der Feder (6) besteht und/oder
in einer Stellung des Pedals (2) zwischen der Zwischenstellung und der Endstellung ein oder kein Kontakt zwischen dem ersten und zweiten Abschnitt (10, 11) der Feder (6) besteht

8. Pedalwertgeberanordnung nach einem oder mehreren der vorhergehenden Ansprüche, **dadurch gekennzeichnet, dass** das Pedal (2) mittels einer Kinematik (12) oder einem Mechanismus (13) mit der Feder (6) mechanisch gekoppelt ist und/oder
das Pedal (2) um eine Schwenkachse (5) verschwenkbar gelagert ist.

9. Pedalwertgeberanordnung nach einem oder mehreren der vorhergehenden Ansprüche, **dadurch gekennzeichnet, dass**
die Feder (6) eine Blattfeder (7) ist und/oder
die Pedalwertgeberanordnung (1) nur eine Feder (6) umfasst.

10. Pedalwertgeberanordnung nach einem oder mehreren der vorhergehenden Ansprüche, **dadurch gekennzeichnet, dass**
die Pedalwertgeberanordnung (1) einen Sensor (18), insbesondere eine elektrische Kontaktierung (19), aufweist zur Erfassung der Zwischenstellung des Pedals (2).

11. Pedalwertgeberanordnung nach einem oder mehreren der vorhergehenden Ansprüche, **dadurch gekennzeichnet, dass**
die Feder (6) wenigstens teilweise, insbesondere vollständig, aus Metall, z. B. Stahl, Aluminium oder Messing, besteht.

12. Pedalwertgeberanordnung nach einem oder mehreren der Ansprüche 1 bis 10, **dadurch gekennzeichnet, dass**
die die Feder (6) wenigstens teilweise, insbesondere vollständig, aus Kunststoff besteht.

13. Pedalwertgeberanordnung nach Anspruch 12, **dadurch gekennzeichnet, dass**
die Feder (6) mit einer Wellung (30) versehen ist, insbesondere die Wellung (30) in einem Teilbereich zwischen dem ersten Abschnitt (10) und dem zweiten Abschnitt (11) ausgebildet ist.

14. Pedalwertgeberanordnung nach Anspruch 12 oder 13, **dadurch gekennzeichnet, dass**
die Feder (6) zweiteilig ausgebildet ist mit einer ersten Feder (6) aus Kunststoff und einer zweiten Feder (6) als Zusatzfeder (29) aus Metall, z. B. Stahl, Aluminium oder Messing.

## Claims

1. Pedal value sensor arrangement (1) for a motor vehicle (27), comprising:
- a pedal (2) movable between a rest position and an end position,
- a spring (6) which applies a return force on the pedal (2) in the direction of the rest position, and
- wherein, in an intermediate position between the rest position and the end position, the spring (6) can apply a greater return force to the pedal (2) in the direction of the rest position than before and/or after the intermediate position,
- wherein the spring (6) has a first segment (10) and a second segment (11),
**characterized in that** the greater return force of the spring (6) occurs by virtue of a contact of the first segment (10) of the spring (6) with the second segment (11) of the spring (6), wherein the spring (6) is formed substantially as an interrupted ring (16) with two ends (17) and the first and second segments (10, 11) of the spring (6) are formed in the region of the two ends (17).

2. Pedal value sensor arrangement according to Claim 1, **characterized in that** the geometry of the spring (6) in the intermediate position causes an additional deformation of the spring (6) and the additional deformation of the spring (6) causes the greater return force, wherein the additional deformation is a deformation which differs from the deformation of the spring (6) on a movement of the spring (6) outside the intermediate position.

3. Pedal value sensor arrangement according to Claim 1 or 2, **characterized in that** the contact between the first segment (10) of the spring (6) and the second segment (11) of the spring (6) causes friction forces and the friction forces cause the greater return force.

4. Pedal value sensor arrangement according to one or more of the preceding claims, **characterized in that** the spring (6) is kinematically coupled with the pedal (2) so that on movement of the pedal (2), the first segment (10) of the spring (6) executes a relative movement in relation to the second segment (11) of the spring (6).

5. Pedal value sensor arrangement according to one or more of the preceding claims, **characterized in that** the geometry of the spring (6), on the contact and relative movement between the first segment (10) of the spring (6) and the second segment (11) of the spring (6), causes the additional deformation of the spring (6).

6. Pedal value sensor arrangement according to one or more of Claims 2 to 5, **characterized in that** the additional deformation is a bending of the spring (6).

7. Pedal value sensor arrangement according to one or more of the preceding claims, **characterized in that** in a position of pedal (2) between the rest position and the intermediate position, there is no contact between the first and second segments (10, 11) of the spring (6), and/or
in the intermediate position of the pedal (2), contact is made between the first and second segments (10, 11) of the spring (6), and/or
in a position of the pedal (2) between the intermediate position and the end position, contact is made or there is no contact between the first and second segments (10, 11) of the spring (6).

8. Pedal value sensor arrangement according to one or more of the preceding claims, **characterized in that** the pedal (2) is mechanically coupled with the spring (6) by means of a kinematic (12) or a mechanism (13), and/or
the pedal (2) is mounted pivotable about a pivot axis (5).

9. Pedal value sensor arrangement according to one or more of the preceding claims, **characterized in that** the spring (6) is a leaf spring (7), and/or the pedal value sensor arrangement (1) comprises only one spring (6).

10. Pedal value sensor arrangement according to one or more of the preceding claims, **characterized in that** the pedal value sensor arrangement (1) comprises a sensor (18), in particular an electrical contact (19), to detect the intermediate position of the pedal (2).

11. Pedal value sensor arrangement according to one or more of the preceding claims, **characterized in that** the spring (6) consists at least partly, in particular completely, of metal e.g. steel, aluminium or brass.

12. Pedal value sensor arrangement according to one or more of Claims 1 to 10, **characterized in that** the spring (6) consists at least partly, in particular completely, of plastic.

13. Pedal value sensor arrangement according to Claim 12, **characterized in that** the spring (6) is provided with an undulation (30), in particular the undulation (30) is formed in a part region between the first segment (10) and the second segment (11).

14. Pedal value sensor arrangement according to Claim 12 or 13, **characterized in that** the spring (6) is formed in two parts with a first spring (6) of plastic and second spring (6) as an additional spring (29) of metal e.g. steel, aluminium or brass.

## Revendications

1. Système de détection de pédale (1) pour un véhicule automobile (27), comprenant
- une pédale (2) mobile entre une position de repos et une position d'extrémité,
- un ressort (6), qui applique à la pédale (2) une force de rappel en direction de sa position de repos,
- dans lequel, dans une position intermédiaire entre la position de repos et la position d'extrémité, une force de rappel plus importante peut être appliquée par le ressort (6) à la pédale (2) en direction de la position de repos qu'avant et/ou après la position intermédiaire,
- dans lequel le ressort (6) présente une première partie (10) et une deuxième partie (11),
**caractérisé en ce que** la force de rappel plus importante apparaît en raison d'un contact de la première partie (10) du ressort (6) avec la deuxième partie (11) du ressort (6), dans lequel le ressort (6) est configuré essentiellement sous la forme d'un anneau interrompu (16) avec deux extrémités (17) et la première et la deuxième parties (10, 11) sont formées dans la région des deux extrémités (17).

2. Système de détection de pédale selon la revendication 1, **caractérisé en ce que** la géométrie du ressort (6) dans la position intermédiaire impose une déformation supplémentaire du ressort (6) et la déformation supplémentaire du ressort (6) conditionne la force de rappel plus importante, dans lequel la déformation supplémentaire est une déformation, qui se différencie de la déformation du ressort (6) lors d'un mouvement du ressort (6) à l'extérieur de la position intermédiaire.

3. Système de détection de pédale selon la revendication 1 ou 2, **caractérisé en ce que** le contact entre la première partie (10) du ressort (6) et la deuxième partie (11) du ressort (6) donne naissance à des forces de frottement et les forces de frottement provoquent la force de rappel plus importante.

4. Système de détection de pédale selon une ou plusieurs des revendications précédentes, **caractérisé en ce que** le ressort (6) est cinématiquement couplé à la pédale (2), de telle manière que, lors d'un mouvement de la pédale (2), la première partie (10) du ressort (6) exécute un mouvement relatif par rapport à la deuxième partie (11) du ressort (6).

5. Système de détection de pédale selon une ou plusieurs des revendications précédentes, **caractérisé en ce que** la géométrie du ressort (6) lors du contact et du mouvement relatif entre la première partie (10) du ressort (6) et la deuxième partie (11) du ressort (6) conditionne la déformation supplémentaire du ressort (6).

6. Système de détection de pédale selon une ou plusieurs des revendications 2 à 5, **caractérisé en ce que** la déformation supplémentaire est une flexion du ressort (6).

7. Système de détection de pédale selon une ou plusieurs des revendications précédentes, **caractérisé en ce que** dans une position de la pédale (2) entre la position de repos et la position intermédiaire il n'existe aucun contact entre la première et la deuxième parties (10, 11) du ressort (6)
et/ou
dans la position intermédiaire de la pédale (2), il existe un contact entre la première et la deuxième parties (10, 11) du ressort (6),
et/ou
dans une position de la pédale (2) entre la position intermédiaire et la position d'extrémité il existe un contact ou il n'existe aucun contact entre la première et la deuxième parties (10, 11) du ressort (6).

8. Système de détection de pédale selon une ou plusieurs des revendications précédentes, **caractérisé en ce que** la pédale (2) est mécaniquement couplée au ressort (6) au moyen d'une cinématique (12) ou d'un mécanisme (13),
et/ou
la pédale (2) est montée de façon pivotante autour d'un axe de pivotement (5).

9. Système de détection de pédale selon une ou plusieurs des revendications précédentes, **caractérisé en ce que** le ressort (6) est un ressort à lame (7) et/ou le système de détection de pédale (1) ne comprend qu'un seul ressort (6).

10. Système de détection de pédale selon une ou plusieurs des revendications précédentes, **caractérisé en ce que** le système de détection de pédale (1) présente un détecteur, en particulier un contact électrique (19), pour la détection de la position intermédiaire de la pédale (2).

11. Système de détection de pédale selon une ou plusieurs des revendications précédentes, **caractérisé en ce que** le ressort (6) se compose au moins en partie, en particulier entièrement, de métal, par exemple d'acier, d'aluminium ou de laiton.

12. Système de détection de pédale selon une ou plusieurs des revendications 1 à 10, **caractérisé en ce que** le ressort (6) se compose au moins en partie, en particulier entièrement, de matière plastique.

13. Système de détection de pédale selon la revendication 12, **caractérisé en ce que** le ressort (6) est doté d'une ondulation (30), en particulier l'ondulation (30) est formée dans une région partielle entre la première partie (10) et la deuxième partie (11).

14. Système de détection de pédale selon la revendication 12 ou 13, **caractérisé en ce que** le ressort (6) est réalisé en deux parties avec un premier ressort (6) en matière plastique et un deuxième ressort (6) comme ressort d'appoint en métal, par exemple en acier, en aluminium ou en laiton.
